# EUROPEAN PATENT APPLICATION

(11) **EP 4 356 708 A1**
(43) Date of publication of application: **24.04.2024**
(21) Application number: 23204219.2
(22) Date of filing: 17.10.2023
(51) Int. Cl.: A01C 7/20, A01B 71/04, F16C 33/58, F16C 11/04

(54) **JOINT SYSTEM FOR ASSEMBLY OF THE SOWING BODIES IN AN AGRICULTURAL SEEDING MACHINE**

(30) Priority: 18.10.2022 AR P220102832
(71) Applicant: B.P.B. Mediterránea S.A., 5900 Villa María (CÓRDOBA) (AR)
(72) Inventor: Boetsch, Gustavo Alejandro, Villa María (CÓRDOBA) (AR)
(74) Representative: Canela Giménez, Teresa

(57) **Abstract**

A joint system (E) suitable for being incorporated into the joint points of the mounting structure (M) that links the horizontal toolbar of a seeding machine with each of the sowing bodies that it incorporates, where said mounting structure comprises two deformable parallelograms that are made up of pairs of lateral arms (9-12) which extend between a pair of vertical bars (5, 6) fixed to said toolbar, and corresponding vertical bars (7, 8) that make up each sowing body. It comprises a rolling element (15) which defines an outer bearing track (22) on whose external face a lateral arm rests, and an inner bearing track (14) linked to a transverse mounting axis. It optionally comprises a single piece made up of an axis that, at one end, configures the bearing, and at its other end, defines a threaded section (18) for the incorporation of a corresponding adjustment nut (19).

## Description

### SCOPE OF THE INVENTION

The main purpose of the present invention, for which an invention patent is requested, is a JOINT SYSTEM FOR ASSEMBLY OF THE SOWING BODIES IN AN AGRICULTURAL SEEDING MACHINE, its purpose being to provide greater stability and robustness to the sowing body and thereby increasing its useful life, improving the performance of the seeder.

More specifically, the present invention refers to a novel system, specially developed to be incorporated into the joint points of the mounting structure that links the horizontal crossbar of the chassis of the seeding machine, with each of the sowing bodies that incorporates the same.

As is known, the aforementioned mounting structure comprises two deformable parallelograms that are made up of pairs of lateral arms which extend between the pairs of vertical bars fixed to said horizontal crossbar of the seeder chassis, and corresponding vertical bars that make up each sowing body.

Precisely, the invented joint system has been specially designed to be incorporated in correspondence of the eight meeting vertices that are defined in said mounting structure, determining respective joint points that give shape to the aforementioned deformable parallelograms.

This innovative system is designed to be installed instead of the traditional coaxial hubs that are mounted at said joint points of the structure, which are provided for the assembly of corresponding transverse bolts that adjust to the sowing body and the crossbar of the seeding machine.

It is an invention which defines a new configuration designed to achieve a superior result, being unpredictable and surprising even for an expert in the specialty. Consequently, in addition to being new, its constructive and functional conception shows a clear inventive activity, so that it meets the conditions required by the Law to be considered a patent for invention.

### PRIOR ART

"Sowing body" is understood as the set of elements of a seeding machine that are in contact with the soil, such as the blade, furrow opener, seed press wheel, furrow cover, etc.

In the different embodiments that are currently known, a sowing unit may use a double fertilizer disc that locates the fertilizer separated from the seed, a wave blade, the furrow opener or planting disc, the depth limiting wheels, the lowering of fertilizer along with the seed, the seed pressing wheel, the capping wheel with notched discs, etc.

Generally, a conventional seeding machine for direct seeding may have six to thirty-six transversely aligned sowing bodies. There are many different models, from large machines to those that are towed and use fewer sowing bodies.

For the assembly of all said sowing bodies, resources are invariably used that allow them to adapt to the soil during progress, regardless of the movements of the seeder itself.

This assembly condition is important because it must ensure that all the elements that make up the sowing body, while the seeder advances, always maintain their operational disposition in contact with the ground.

For the above reason, an articulated mounting structure is used so that each sowing body can adopt, during advance, relative movements in the vertical plane, with respect to the horizontal crossbar of the seeder chassis.

In preferred embodiments, said mounting structure comprises two deformable parallelograms that are formed with pairs of lateral arms which extend between the pairs of vertical bars fixed to said horizontal crossbar of the seeder chassis, and corresponding vertical bars that make up each sowing body, where the meeting points define pivot points that are fixed with a respective transverse mounting bolt.

Under the conditions set forth, eight joint points are established that give shape to two deformable parallelograms which constitute the aforementioned mounting structure.

The prior art shows that each of said pivot points uses an external hub, of larger diameter provided for the assembly of the lateral arm, which is completed with an internal hub of smaller diameter and coaxial to the previous one that is incorporated for the assembly of the transverse adjustment bolt.

In the manner described above, both hubs remain in frictional contact, producing friction during the movements of each sowing body to adapt to the ground. These frictions, over time, produce wear and thus reduce the precision in the assembly of each sowing body, affecting the integral operation of the machine, making it necessary to carry out periodic maintenance and repair tasks.

As part of the prior art, the Argentine patent application P20210100660 entitled BEARING TO BE APPLIED TO THE ASSEMBLY OF SOWING BODIES IN SEEDING MACHINES is mentioned.

This background discloses a bearing specially designed to act as a pivoting joint system at the meeting points of the pair of deformable parallelograms that constitute the mounting structure of a sowing body.

To this end, the bearing taught in this disclosure is distinguished in that it comprises an outer ring that has a flange projecting outwards which defines a stop face intended for the support of the lateral arms of the structure, and is completed with a distinguished coaxial internal ring because it is longer than the previous one, so that it projects outwards from both ends.

Precisely said internal ring, at one end, determines the stop for the support of the vertical bars of the mounting structure, while at its other end it defines the stop for the support of a transverse fixing bolt, allowing relative movement between both parts that are linked.

### BRIEF DESCRIPTION OF THE INVENTION -ADVANTAGES

The object of the present invention is a joint system for assembling sowing bodies in an agricultural seeding machine, which comprises a bearing along whose internal track a screw, bolt or similar extends, for assembly with an adjustment nut, where said screw, bolt or similar fulfills the function of a pivot axis.

To do this, the same axis, at one end, is linked to the internal rolling track for the bushing required by each joint, while, at its other end, it defines a threaded section for the incorporation of the corresponding adjustment nut that fixes the axis at each point of joint.

It is also a possible variant of the present invention that the axis itself (bolt, screw or similar) includes, at the opposite end of its threaded section, the internal rolling track of the required bearing, thus forming a single piece. Undoubtedly, this variant, shows a joint system that fulfills the double function of inner ring of a bearing and fixing screw in the same unit, which provides greater stability and robustness to the assembly, increasing the resistance of the assembly and improving its useful life, since by being a single piece, the problems generated by using a bearing mounted on a rotating axis are avoided.

In this case, the invented joint axis has an end section where the rolling track required by the joint that is formed are machined, while, at its other end, it defines a threaded section for incorporating the adjustment nut.

The invention contemplates that the axis has a housing, preferably hexagonal, in the section where the aforementioned bearing tracks are defined, designed to be able to insert a manual tool that allows it to be kept fixed during the adjustment of the nut during assembly.

Likewise, the invented joint system stands out because on the end opposite to the threaded section of the axis, it defines a preferably hexagonal housing created to be able to insert a manual key, through which it is kept fixed during the adjustment of the nut at the moment. of the assembly.

On the other hand, the presence of a mechanical seal, a deflector type, is included on the face of the axis that faces the outside of the structure, given that it is the face most exposed to contamination or even to the incidence of pressurized water jets when the user cleans the machine, improving the shielding and therefore the useful life of the bearing.

According to this invention, because the lower ring of the bearing is linked or received in a tight manner to the axis (bolt, screw or similar), the existing play between both pieces is eliminated, thereby improving the stability of the assembly, and consequently the alignment of the parallelogram which defines the mounting structure.

On the other hand, as is known, if during the assembly of a conventional bearing (already known), the fixing nut is not properly adjusted, or for some reason the nut releases its tension, the screw rotates on the inner ring of the bearing, this causes wear of both components causing premature failure.

With the joint system of this invention, if for any reason the adjustment nut is released and loses tension, the assembly is not affected, so that the bearing section will continue to function as such.

Within the same inventive conception, in a possible variant, the aforementioned problem is eliminated, since in the internal track, provided directly or not by the standard radial ball bearing, the stop for the adjustment of the entire assembly is made through of one or more washers, and is adjusted with the nut and bolt.

Another possible option within the same constructive concept, presents the same internal track, which in this case is configured with a bearing of the type that uses rollers and a corresponding upper race, in which case stop washers or a stop on the same external face, and is adjusted with the nut.

In another possible option, the bearing that is incorporated has a larger diameter lower ring, which abuts on the upright of the structure, while its upper ring abuts on the lateral arm.

The main object of the present invention is a joint system for assembling the sowing bodies of an agricultural seeding machine capable of being incorporated into the joint points of the mounting structure that links the horizontal crossbar of the chassis of the seeding machine, with each of the sowing bodies that it incorporates, where said mounting structure comprises two deformable parallelograms that are made up of pairs of lateral arms which extend between the pair of vertical bars fixed to said horizontal crossbar of the seeder chassis, and corresponding vertical bars that make up each sowing body. It comprises a rolling element which defines an upper bearing track on wh8ose external face a lateral arm rests, and a lower bearing track linked to a transverse mounting axis.

The invented system comprises a single piece made up of an axis that, at one end, configures the bearing, and at its other end, defines a threaded section for the incorporation of the corresponding adjustment nut. Likewise, on the end opposite to the threaded section of the transverse axis, a central housing, preferably hexagonal, that receives a manually operated key is defined.

On the external face of the transverse axis, opposite to the threaded section, the seat for an annular seal gasket is defined.

In possible variants, the internal track of the bearing is defined, machined, on the solid body of the transverse axis.

A nut acts on the threaded section of the transverse axis to adjust the part to the structure.

The transverse mounting axis fits snugly over the lower bearing track of the rolling element.

The lateral arms of the deformable parallelogram extend supported on the external faces of the vertical uprights. However, a configuration is also possible in which the lateral arms of the deformable parallelogram extend resting on the internal faces of the vertical uprights.

In another variable, the transverse axis includes an internal step, provided for the support of the fixed bars at each joint point. In the same way, the external ring of the bearing defined on the transverse axis defines the step for the support of the lateral arms at each joint point or the lateral arms themselves have a step that acts as a stop for the bearing.

The present invention provides that the stop for mounting the bearing that integrates the joint system is made using washers, and is adjusted with a nut.

The bearings applicable to the present invention can be ball bearings, roller bearings or any other type of bearing selected from the group consisting of deep groove ball bearings, angular contact bearings, cylindrical roller bearings, needle roller bearings, spherical rollers..

Finally, the bearing has a lower ring that abuts on the upright of the joint, while its upper ring abuts on the lateral arm of the joint.

### INVENTIVE ACTIVITY

No joint system to be applied to the mounting structure of a sowing body that is currently known proposes, or even suggests, the constructive solution that arises from what is indicated in the preceding paragraphs, which is why it is a question of a proposal that, in addition to being novel, has a clear inventive activity.

### SYNTHETIC DESCRIPTION OF THE FIGURES

To specify the advantages thus briefly discussed, to which users and experts in the specialty will be able to add many more, and to facilitate the understanding of the constructive, constitutive and functional characteristics of the invented joint axis, a preferred exemplary embodiment is described below, which is illustrated schematically and without a specific scale, in the attached sheets, with the express clarification that, precisely because it is an example, it is not appropriate to assign it a limiting or exclusive nature to the scope of protection of the present invention, but rather it simply has a purely explanatory and illustrative intention of the basic conception on which it is based.
Figure 1 is a perspective view that represents a conventional sowing body, whose mounting structure includes the joint system of this invention.
Figure 2 is also a perspective view that represents the mounting structure that includes the joint system of this invention where the lateral arms extend over the external faces of the vertical uprights of the structure.
Figure 3 is also a perspective view that represents the mounting structure that includes the joint system of this invention where the lateral arms extend over the internal faces of the vertical uprights of the structure, and despite the direction of the arms it is independent of the direction of assembly in the application that seeks to patent this invention.
Figure 4 is also a perspective view that represents the joint system of this invention in a variant embodiment.
Figure 5 is a front view of the same joint system of the previous figure.
Figure 6 is a cross-sectional view according to plane IV-IV indicated in the previous figure.
Figure 7 is an exploded perspective view that shows the set of elements that make up the joint system of this invention according to the variant represented in Figure 4.
Figure 8 is a cross-sectional view of the construction variant represented in Figure 4, taken at a joint point.
Figure 9 is a cross-sectional view of another construction variant of the present invention, taken at a joint point of the mounting structure.
Figure 10 is a cross-sectional view of another possible construction variant of the present invention, taken at a joint point of the mounting structure.
Figure 11 is a cross-sectional view taken at a joint point of the mounting structure that represents another construction variant of the same invention.

It is clarified that, in all the figures, the same or equivalent reference numbers and letters correspond to the same or equivalent parts or elements constituting the assembly, according to the example chosen for the present explanation of the invented joint system.

### DETAILED DESCRIPTION OF THE INVENTION

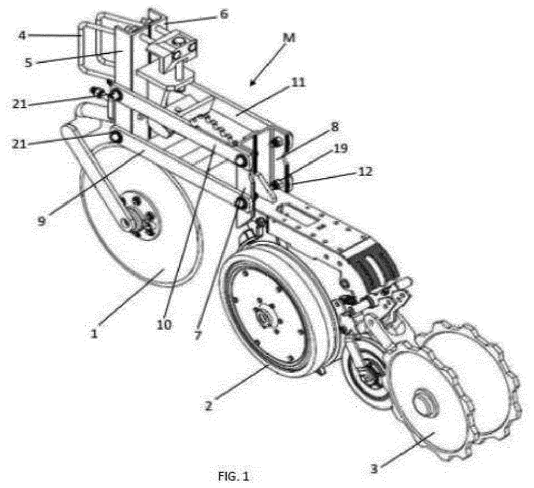

Figure 1 represents a conventional sowing body where the presence of a furrow opening disc (1), the tightening wheels (2) and the capping wheels (3) can be seen.

It can also be seen that for mounting on the front crossbar of the chassis of the seeding machine, a clamp (4) is used, distinguished because it includes the vertical fixed bars (5) and (6) that make up the mounting structure (M) that is incorporates to link the sowing bodies to the seeder.

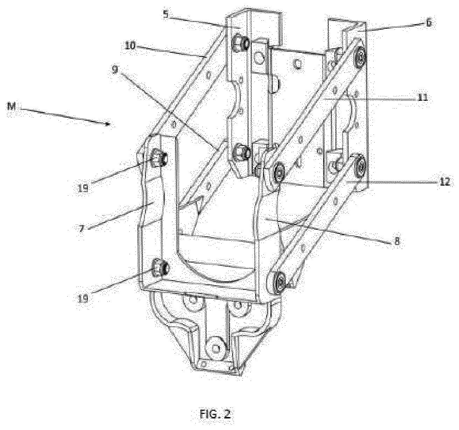

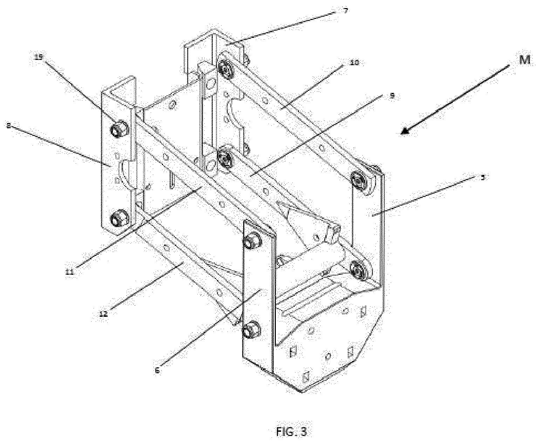

As can also be seen in Figures 2 and 3, said mounting structure (M) comprises a pair of deformable parallelograms linked together that are formed by said vertical fixed bars (5) and (6) that make up said clamp (4). and the vertical fixed bars (7) and (8) that make up the sowing body, which are linked through the lateral arms (9), (10), (11) and (12).

In both figures it can be seen that the corner meetings that are defined with the superposition of each of the lateral arms (9), (10), (11) and (12) and the aforementioned vertical bars (5), (6), (7) and (8), a respective joint point is constituted, giving shape to the deformable parallelograms that make up the mounting structure (M).

Figure 2 represents the case where the lateral arms (9), (10), (11) and (12) extend supported on the external faces of the vertical uprights (5), (6), (7) and (8).

Figure 3 represents the case where the lateral arms (9), (10), (11) and (12) extend supported on the internal faces of the vertical uprights (5), (6), (7) and (8).

Precisely, said joint points are constituted through the joint system (E) to which the present invention refers.

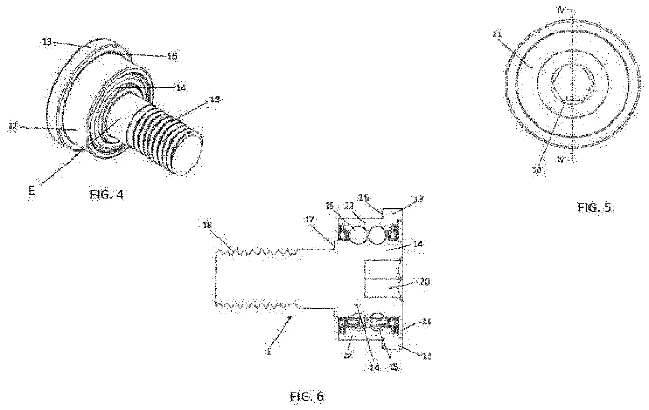

Looking at Figures 4 to 6, it is possible to see how, in a possible embodiment of the present invention, the joint system (E) is configured, which, at one end, defines the lower race (14) of a bearing that is complete with the external ring (13) defined on the upper track (22), between which the rolling elements (15) are arranged.

Especially in Figure 6, it can be seen that the same joint system (E) includes the internal step (17), provided for the support of the fixed bars at each joint point, while the external ring (13) defines the step (16) for the support of the lateral arms at each joint point.

It can also be seen that the same joint system (E), at its other end, defines a threaded section (18) intended for mounting the adjustment nut (19) (visible in Figures 1, 2 and 3), in so much so that, at its opposite end, it includes an opening (20) formed for the entry of a manual tool to prevent the screw, bolt, pin or the like that makes up the transverse axis, from rotating when adjusting said nut (19).

Looking now at Figures 5 and 6, it is possible to appreciate the presence of a novel annular seal gasket (21), deflector type, whose purpose is to protect the exposed face of the joint.

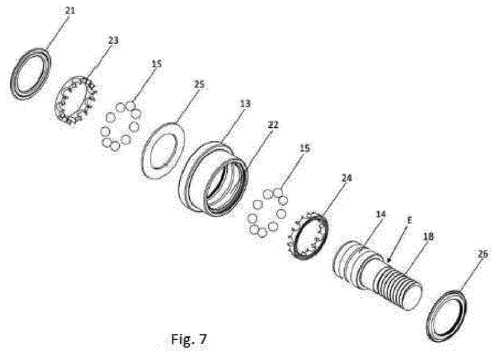

The exploded view of Figure 7 has been incorporated to facilitate the understanding of the combination of elements that make up the joint system according to the variant represented in Figures 4, 5 and 6. The presence of the cages (23) and (24) provided for housing the rolling elements (15) that run on the aforementioned rolling tracks (14) and (22) can be seen, as well as the washers (25) and (26).

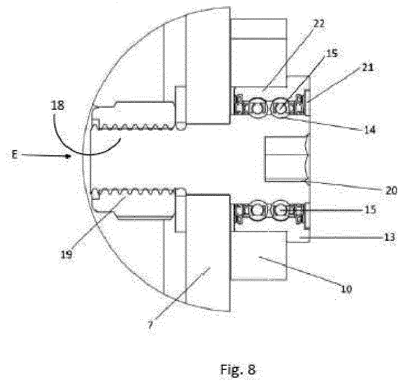

Now looking at Figure 8, it can be seen how the assembly of the system (E) of this variant of the present invention is established at each of the joint points in the mounting structure (M) using the example represented in the preceding figures. In this case, the presence of the lateral arm (10) adjacent to the vertical upright (7) can be seen, which rests on the external ring (13) where the upper race (22) of the bushing that is formed is defined, through which the rolling elements (15) run, with the particularity that, according to this variant, the internal track (14) that they use, is configured on the solid body of the axle that makes up the joint system (E).

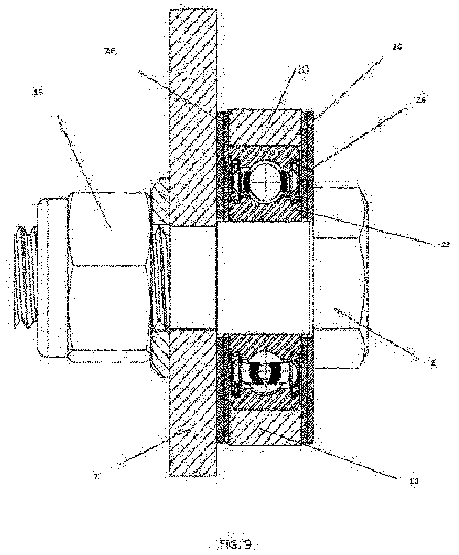

Another construction option incorporated, within the same inventive conception, is the one represented in Figure 9, where the internal track (23) is provided directly by the radial ball bearing (24), in which case the stop for adjusting the transverse axis or fixing bolt (25) is made through the washers (26), and is adjusted with the nut (19).

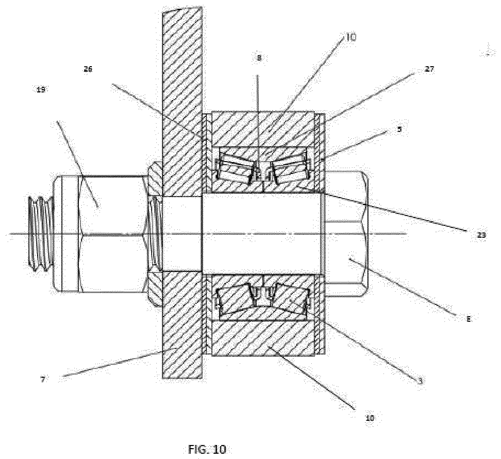

Still another possible option within the same constructive conception is represented with Figure 10 where the same internal track (23), in this case is configured with a bearing of the type that uses rollers and a corresponding upper race (27), in which case, the stop washers (26) will also be used and adjusted with the nut (19).

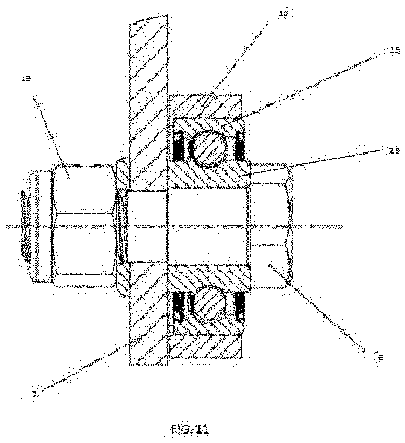

Finally, Figure 11 represents yet another construction option of the present invention, where the bearing that is incorporated has a lower ring (28) that abuts on the upright (7), while its upper ring (29) abuts on the lateral arm (10).

## Claims

1. JOINT SYSTEM FOR ASSEMBLY OF THE SOWING BODIES IN AN AGRICULTURAL SEEDING MACHINE, suitable for being incorporated into the joint points of the mounting structure that links the horizontal crossbar of the chassis of the seeding machine, with each of the sowing bodies that it incorporates, wherein said mounting structure comprises two deformable parallelograms that are formed with pairs of lateral arms which extend between the pair of vertical bars fixed to said horizontal crossbar of the seeder chassis, and corresponding vertical bars that make up each sowing body, **characterized in that** it comprises a rolling element which defines an upper bearing track on whose external face a lateral arm rests, and a lower bearing track linked to a transverse mounting axis.

2. JOINT SYSTEM, as claimed in claim 1, **characterized in that** it comprises a single piece made up of an axis that, at one end, configures the bearing, and at its other end, defines a threaded section for the incorporation of the corresponding adjustment nut.

3. JOINT SYSTEM, as claimed in claim 1, **characterized in that** on the end opposite to the threaded section of the transverse axis, a central housing, preferably hexagonal, that receives a manually operated key is defined.

4. JOINT SYSTEM, as claimed in claim 1, **characterized in that** on the external face of the transverse axis, opposite to the threaded section, the seat for an annular seal gasket is defined.

5. JOINT SYSTEM, as claimed in claim 1, **characterized in that** the internal track of the bearing is defined, machined, on the solid body of the transverse axis.

6. JOINT SYSTEM, as claimed in claim 1, **characterized in that** a nut acts on the threaded section to produce the adjustment of the piece to the structure.

7. JOINT SYSTEM, as claimed in claim 1, **characterized in that** the transverse mounting axis fits snugly on the lower bearing track of the rolling element.

8. JOINT SYSTEM, as claimed in claim 1, **characterized in that** the lateral arms extend supported on the external faces of the vertical uprights.

9. JOINT SYSTEM, as claimed in claim 1, **characterized in that** the lateral arms extend supported on the internal faces of the vertical uprights.

10. JOINT SYSTEM, as claimed in claim 2, **characterized in that** the transverse axis includes an internal step, provided for the support of the fixed bars at each joint point.

11. JOINT SYSTEM, as claimed in claim 2, **characterized in that** the external ring of the bearing defined on the transverse axis defines the step for the support of the lateral arms at each joint point.

12. JOINT SYSTEM, as claimed in claim 1, **characterized in that** the lateral arms have a step that acts as a bearing stop.

13. JOINT SYSTEM, as claimed in claim 1, **characterized in that** the stop for mounting the bearing that integrates the joint resource is made by means of washers, and is adjusted with screw and nut system.

14. JOINT SYSTEM, as claimed in claim 1, **characterized in that** the bearing is a bearing selected from the group consisting of deep groove ball bearings, angular contact bearings, cylindrical roller bearings, needle roller bearings, spherical rollers.

15. JOINT SYSTEM, as claimed in claim 1, **characterized in that** the bearing has a lower ring that abuts on the upright of the joint, while its upper ring abuts on the lateral arm of the joint.
